# EUROPEAN PATENT APPLICATION

(11) **EP 4 631 918 A1**
(43) Date of publication of application: **15.10.2025**
(21) Application number: 24850343.5
(22) Date of filing: 11.11.2024
(51) Int. Cl.: C02F 1/42

(54) **RESIN TANK ASSEMBLY AND WATER SOFTENING DEVICE**

(30) Priority: 01.03.2024 CN 202410236317; 01.03.2024 CN 202420401851 U
(71) Applicant: Foshan Shunde Midea Water Dispenser Mfg Co., Ltd., Foshan, Guangdong 528311 (CN); Midea Group Co., Ltd., Foshan, Guangdong 528311 (CN)
(72) Inventor: XIN, Jun, Foshan, Guangdong 528311 (CN); HE, Futian, Foshan, Guangdong 528311 (CN); ZHANG, Ye, Foshan, Guangdong 528311 (CN); LIU, Huachun, Foshan, Guangdong 528311 (CN); ZHU, Yunbo, Foshan, Guangdong 528311 (CN); PENG, Jing, Foshan, Guangdong 528311 (CN); LIAO, Yumin, Foshan, Guangdong 528311 (CN); LI, Zhonghua, Foshan, Guangdong 528311 (CN); LIU, Xiaowen, Foshan, Guangdong 528311 (CN); GOU, Jian, Foshan, Guangdong 528311 (CN)
(74) Representative: Ran, Handong
(86) International application number: PCT/CN2024/131347
(87) International publication number: WO 2025/179951

(57) **Abstract**

The present application relates to the field of soft water, and provides a resin tank assembly and a water softening device, where the resin tank assembly includes a tank body, a water path plate, a central tube and an adapter member. The tank body is provided with an accommodation cavity and a tank opening communicating with the accommodation cavity; the water path plate is mounted at an end of the tank body close to the tank opening, and the water path plate is provided with a soft water channel and an adapter seat communicating with the soft water channel; the central tube is provided inside the accommodation cavity, and a first end of the central tube penetrates through the tank opening; and the adapter member is connected between a first end of the central tube and the adapter seat, and the adapter member and the adapter seat enclose to form a water guide chamber communicating the soft water channel and the central tube. The present application simplifies connection between the water path plate and the central tube, while reducing a flow change at a junction of the water path plate and the central tube, and improving a soft water output efficiency of the water softening device.

## Description

### CROSS-REFERENCES TO RELATED APPLICATIONS

The present application claims priorities to Chinese patent application No. 2024102363179, filed on March 01, 2024 and entitled "Resin Tank Assembly and Water Softening Device", and Chinese Patent Application No. 2024204018516, filed on March 01, 2024 and entitled "Water Path Connect Component and Water Softener", Which are hereby incorporated by reference in their entireties.

### TECHNICAL FIELD

The present application relates to the field of soft water, and in particular, to a resin tank assembly and a water softening device.

### BACKGROUND

A traditional connection structure between a water path plate and a central tube is complicated, which easily forms a flow restriction on the central tube, affecting a soft water output efficiency of a water softening device.

In addition, in the related art, traditional connection structure between a water path component and the central tube is complicated, which is difficult in assembly alignment and is easy to be mounted incorrectly. Re-mounting requires repeated disassembly and assembly of a tank body, which is not conducive to production.

### BRIEF SUMMARY

The present application aims to solve at least one of the problems in the related art. Therefore, the present application provides a resin tank assembly, which simplifies a connection between a water path plate and a central tube, reduces a flow change at a junction of the water path plate and the central tube, and improves the soft water output efficiency of a water softening device.

The present application further provides a water softening device.

A resin tank assembly according to the present application, including:
a tank body, where the tank body is provided with an accommodation cavity and a tank opening communicating with the accommodation cavity;
a water path plate, where the water path plate is mounted at an end of the tank body close to the tank opening, and the water path plate is provided with a soft water channel and an adapter seat communicating with the soft water channel;
a central tube, where the central tube is provided inside the accommodation cavity, and a first end of the central tube penetrates through the tank opening; and
an adapter member, where the adapter member is connected between the first end of the central tube and the adapter seat, and the adapter member and the adapter seat enclose to form a water guide chamber communicating the soft water channel and the central tube.

In some embodiments, a flow rate of the water guide chamber is greater than or equal to a flow rate of the central tube.

In some embodiments, the adapter seat extends from an axis of the tank body in a circumferential direction.

In some embodiments, the adapter seat encloses to form the water guide chamber.

In some embodiments, a side of the adapter seat facing the accommodation cavity is provided with a communication port.

In some embodiments, the adapter member is blocked at the communication port.

In some embodiments, an end of the adapter seat facing a circumferential direction is provided to partially intersect with the soft water channel.

In some embodiments, a side of the soft water channel corresponding to the adapter seat is provided with a communication notch.

In some embodiments, the communication notch is configured to communicate the soft water channel and the water guide chamber.

In some embodiments, a flow area of the communication notch is greater than or equal to a flow area of the water guide chamber.

In some embodiments, an inner wall of the communication port is provided with an annular abut step.

In some embodiments, a side of an outer peripheral edge of the adapter member facing the adapter seat extends to form an abut flange.

In some embodiments, the abut step abuts against the abut flange.

In some embodiments, an outer peripheral wall of the adapter member is provided with a seal slot.

In some embodiments, the resin tank assembly further includes a seal member.

In some embodiments, the seal member is sleeved inside the seal slot, and the seal member abuts between a slot wall of the seal slot and an inner wall of the communication port.

In some embodiments, the adapter member is integrally formed with the central tube.

In some embodiments, a side of the water path plate facing the tank body extends to form a cover body portion.

In some embodiments, the cover body portion covers an end of the tank body provided with the tank opening.

In some embodiments, the adapter seat is provided inside an inner cavity of the cover body portion.

The present application further provides a water softening device, whose resin tank assembly includes a tank body, a water path component, a central tube and an adapter member. The tank body is provided with an accommodation cavity and a tank opening communicating with the accommodation cavity; the water path plate is mounted at an end of the tank body close to the tank opening, the water path plate is provided with a soft water channel and an adapter seat communicating with the soft water channel; the central tube is provided inside the accommodation cavity, and a first end of the central tube penetrates through the tank opening; and the adapter member is connected between a first end of the central tube and the adapter seat, and the adapter member and the adapter seat enclose to form a water guide chamber communicating the soft water channel and the central tube.

The above one or more solutions in the embodiments of the present application have at least one of the following effects.

In the present application, the connection between the water path plate and the central tube is provided with the adapter seat, the first end of the central tube is provided with the adapter member, the water guide chamber is formed between the adapter seat and the adapter member, and the water guide chamber communicates the central tube and the soft water channel. Therefore, a maximum flow rate at the connection between the central tube and the soft water channel is increased by providing the water guide chamber, flow restriction caused by inconsistency of the connection structure and a flow channel at the connection between the central tube and the soft water channel is reduced, and soft water output efficiency of the water softening device is effectively improved.

The present application aims to solve at least one of the problems in the related art. Therefore, the present application further provides a resin tank assembly, which simplifies a connection between a water path component and a central tube, facilitates alignment, and improves mounting efficiency.

The present application further provides a water softening device.

A resin tank assembly according to the present application, including:
a tank body, where the tank body is provided with an accommodation cavity and a tank opening communicating with the accommodation cavity;
a water path component, where the water path component is mounted at an end of the tank body close to the tank opening, the water path component is provided with a soft water channel, a side of the water path component facing the tank opening is provided with an adapter seat communicating with the soft water channel, and the adapter seat is provided to be an open port;
a central tube, where the central tube is provided inside the accommodation cavity, and a first end of the central tube penetrates through the tank opening; and
an adapter member, where the adapter member is connected to the first end of the central tube and is provided to cover an open port of the adapter seat to form a water guide chamber, and the water guide chamber communicates the central tube and the soft water channel.

In some embodiments, the water guide chamber extends from the tank opening in a circumferential direction facing the tank body.

In some embodiments, an outer wall of the adapter seat extends from a side of the water path component toward a direction of the tank body, and encloses to form a water guide slot.

In some embodiments, an end of the adapter seat facing a circumferential direction is provided to partially intersect with the soft water channel.

In some embodiments, a side of the soft water channel corresponding to the adapter seat is provided with a communication notch.

In some embodiments, the communication notch is configured to communicate the soft water channel and the water guide chamber.

In some embodiments, a flow rate of the communication notch is greater than or equal to a flow rate of the water guide chamber.

In some embodiments, an inner wall of the open port is provided with an annular abut step.

In some embodiments, a side of an outer peripheral edge of the adapter member facing the adapter seat extends to form an abut flange.

In some embodiments, the abut step abuts against the abut flange.

In some embodiments, an outer peripheral wall of the adapter member is provided with a seal slot.

In some embodiments, the resin tank assembly further includes a seal member.

In some embodiments, the seal member is sleeved inside the seal slot, and the seal member abuts between a slot wall of the seal slot and an inner wall of the open port.

In some embodiments, a flow cross-sectional area of the water guide chamber is greater than or equal to a flow cross-sectional area of the central tube.

In some embodiments, the adapter member is integrally formed with the central tube.

In some embodiments, a side of the water path component facing the tank body extends to form a cover body portion.

In some embodiments, the cover body portion covers an end of the tank body provided with the tank opening.

In some embodiments, the adapter seat is provided inside an inner cavity of the cover body portion.

The present application further provides a water softening device, whose resin tank assembly includes a tank body, a water path component, a central tube and an adapter member. The tank body is provided with an accommodation cavity and a tank opening communicating with the accommodation cavity; the water path component is mounted at an end of the tank body close to the tank opening, the water path component is provided with a soft water channel, a side of the water path component facing the tank opening is provided with an adapter seat communicating with the soft water channel, and the adapter seat is provided to be an open port; the central tube is provided inside the accommodation cavity, and a first end of the central tube penetrates through the tank opening; and the adapter member is connected to the first end of the central tube and is provided to cover an open port of the adapter seat to form a water guide chamber, and the water guide chamber communicates the central tube and the soft water channel.

The above one or more solutions in the embodiments of the present application have at least one of the following effects.

In the present application, the adapter seat at the water path component is provided to be the open port, the central tube is connected to the adapter seat through the adapter member, and the adapter member can be pre-mounted with an end of the central tube before docking. When the central tube is connected to the water path component, since the adapter seat docks with the adapter member through the open port, alignment between the adapter seat and the adapter member is facilitated, the connection between the water path component and the central tube is simplified, and mounting efficiency is improved.

Additional aspects and advantages of the present application will be set forth in part in the description which follows and, in part, will be apparent from the description, or may be practice of the present application.

### BRIEF DESCRIPTION OF THE DRAWINGS

In order to clearly illustrate the solutions according to the present application, the accompanying drawings used in the description of the embodiments of the present application are briefly introduced below. It should be noted that, the drawings in the following description are only part embodiments of the present application. For those of ordinary skilled in the art, other drawings may also be obtained based on these drawings without creative efforts.
FIG. 1 is an exploded view of an embodiment of a resin tank assembly according to an embodiment of the present application;
FIG. 2 is a longitudinal sectional view of the resin tank assembly of FIG. 1;
FIG. 3 is an enlarged view of A in FIG. 2; and
FIG. 4 is an axonometric view of a resin tank assembly.

### Reference numerals:

10: resin tank assembly;
100: tank body; 110: accommodation cavity; 120: tank opening;
200: water path component; 210: soft water channel; 211: communication notch; 220: adapter seat; 221: communication port; 222: annular abut step; 230: cover body portion;
300: central tube;
400: adapter member; 410: water guide chamber; 420: abut flange; 430: seal slot.

### DETAILED DESCRIPTION

Implementations of the present application are further described in detail below with reference to the drawings and embodiments. The following embodiments are intended to illustrate the present application, but are not intended to limit the scope of the present application.

In the description of the embodiments of the present application, it should be noted that the orientation or positional relationship indicated by terms such as "center", "longitudinal", "lateral", "upper", "lower", "front", "rear", "left", "right", "vertical", "horizontal", "top", "bottom", "inside", "outside", etc. are based on the orientation or positional relationship shown in the drawings, and are merely for the convenience of describing the embodiments of the present application and simplifying the description, rather than indicating or implying that the device or element stated must have a particular orientation, is constructed and operated in a particular orientation, and thus is not to be construed as limiting the embodiments of the present application. Moreover, the terms "first", "second", "third", and the like are used for descriptive purposes only and are not to be construed as indicating or implying relative importance.

In the description of the embodiments of the present application, it should be noted that, unless explicitly specified and defined otherwise, the terms "connected to" and "connected" shall be understood broadly, for example, it may be either fixedly connected or detachably connected, or may be integrated; it may be either mechanically connected, or electrically connected; it may be either directly connected, or indirectly connected through an intermediate medium. The specific meanings of the terms above in embodiments of the present application can be understood by a person skilled in the art in accordance with specific conditions.

In the embodiments of the present application, unless otherwise clearly stated and defined, a first feature being located "on" or "under" a second feature means that the first feature is in direct contact with the second feature or the first feature is in contact with the second feature by an intervening media. In addition, the first feature is "on", "above" and "over" the second feature may refer to that the first feature is directly above or obliquely above the second feature, or simply refer to that the level height of the first feature is higher than that of the second feature. The first feature is "under", "below" and "beneath" the second feature may refer to that the first feature is directly below or obliquely below the second feature, or simply refer to that the level height of the first feature is lower than that of the second feature.

In the description of this specification, the description with reference to the terms "an embodiment", "some embodiments", "example", "specific example", or "some examples" etc. means that the specific features, structures, materials or characteristics described in conjunction with the embodiment or example are included in at least one embodiment or example of the embodiments of the present application. In this specification, the schematic representations of the above terms do not necessarily refer to the same embodiment or example. Moreover, the specific features, structures, materials or characteristics described may be combined in any one or more embodiments or examples in a suitable manner. In addition, those skilled in the art may integrate and combine the different embodiments or examples described in this specification and the features of the different embodiments or examples, without contradiction.

A water softening device is a device that uses cation exchange resin to remove calcium and magnesium ions from water, reduce hardness of raw water, and thus achieve an effect of softening hard water. Water softeners are currently widely used in industrial and energy systems, and have strong device attributes. In household use, soft water produced by a water softening device usually has functions of reducing scale in water heat devices such as water heaters, wall-mounted boilers, electric water heaters, and bathrooms, avoiding pipeline blockage, reducing attenuation of heat exchange efficiency of a heat device, reducing use of detergents, being more friendly to human skin, and making clothes softer and brighter in color after washing, etc.

In the related art, a water path plate is connected between a resin tank and a soft water valve to realize water path integration of a water softening device. A central tube is connected between the resin tank and the water path plate to guide out soft water softened by the resin tank. A traditional connection structure between the water path plate and the central tube is complicated, which easily forms a flow restriction on the central tube, affecting a soft water output efficiency of a water softening device.

In the related art, the traditional connection structure between the water path component and the central tube is complicated, which is difficult in assembly alignment and is easy to be mounted incorrectly. Re-mounting requires repeated disassembly and assembly of a tank body, which is not conducive to production.

The present application provides a resin tank assembly and a water softening device.

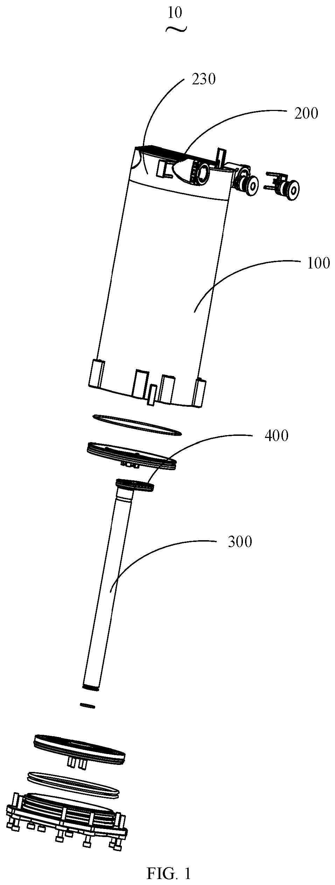

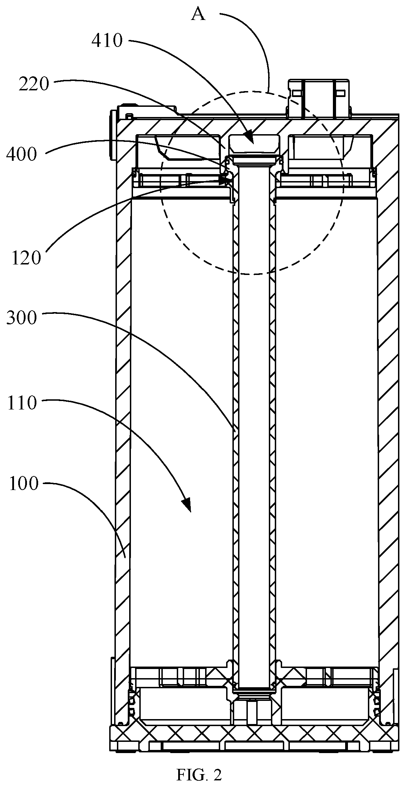

In the embodiment of the present application, as shown in FIG. 1 to FIG. 4, the resin tank assembly includes a tank body, a water path plate, a central tube and an adapter member. The tank body is provided with an accommodation cavity and a tank opening communicating with the accommodation cavity; the water path plate is mounted at an end of the tank body close to the tank opening, and the water path plate is provided with a soft water channel and an adapter seat communicating with the soft water channel; the central tube is provided inside the accommodation cavity, and a first end of the central tube penetrates through the tank opening; and the adapter member is connected between the first end of the central tube and the adapter seat, and the adapter member and the adapter seat enclose to form a water guide chamber communicating the soft water channel and the central tube.

The tank body 100 is provided generally in a shape of a hollow cylinder, and an accommodation cavity 110 is formed inside the tank body 100, where the accommodation cavity 110 is a main part of the tank body 100 and is used to store resin. Based on application requirements, the accommodation cavity 110 may be designed to have different shapes and sizes to adapt to different resin volumes and performance requirements, which are not specifically limited here.

An end surface of an end of the tank body 100 is provided with a tank opening 120, and the tank opening 120 is configured to allow and control fluid to flow into and out of the accommodation cavity 110. A size and a shape of the tank opening 120 may be adjusted based on actual needs to optimize flow performance of resin.

The water path component 200 is mounted at an end of the tank body 100 close to the tank opening 120, and is provided with a soft water channel 210. The soft water channel 210 may guide a direction of water flow to guide soft water softened by the resin out of the tank body 100 for user use. A dock position between the water path component 200 and the tank opening 120 is provided with an adapter seat 220, and an end of the adapter seat 220 facing the tank opening 120 is designed to be an open port 221, to dock with the central tube 300.

The central tube 300 is located inside the accommodation cavity 110, and a first end of the central tube 300 penetrates through the tank opening 120. A second end of the central tube 300 is provided at a bottom of the accommodation cavity 110 of the tank body 100, and the central tube 300 is mainly used as a channel for soft water flow guide in the tank body 100.

The adapter member 400 is connected to the first end of the central tube 300 and is provided to cover at the open port 221 of the adapter seat 220 to form a water guide chamber 410. The water guide chamber 410 connects the central tube 300 and the soft water channel 210 to ensure smooth flow of the water. A connection between the water path component 200 and the central tube 300 is simplified, which makes alignment more convenient and improves mounting efficiency. In addition, resistance of water flow may also be reduced, and filtering efficiency is improved.

In the present application, the connection between the water path plate and the central tube 300 is provided with the adapter seat 220, the first end of the central tube 300 is provided with the adapter member 400, the water guide chamber 410 is formed between the adapter seat 220 and the adapter member 400, and the water guide chamber 410 communicates the central tube 300 and the soft water channel. Therefore, a maximum flow rate at the connection between the central tube 300 and the soft water channel is increased by providing the water guide chamber 410, flow restriction caused by inconsistency of the connection structure and a flow channel at the connection between the central tube 300 and the soft water channel is reduced, and soft water output efficiency of the water softening device is effectively improved.

In some embodiments, a flow rate of a communication notch 211 is greater than or equal to a flow rate of the water guide chamber 410. In this embodiment, since the water guide chamber 410 is a main water flow channel of the soft water in the resin tank assembly 10, the flow rate of the communication notch 211 is provided to be greater than or equal to the flow rate of the water guide chamber 410. A soft water chamber communicates the soft water channel 210 and the central tube 300, and is responsible for guiding water to flow into a resin layer or guiding water to flow out of the resin layer. If the flow rate of the communication notch 211 is less than the flow rate of the water guide chamber 410, the water will not flow smoothly, and even accumulation will occur. This will not only affect softening effect, but may also cause an impact force of the water flow on the resin layer to be insufficient, affecting adsorption effect of the resin layer. In order to make the flow rate of the communication notch 211 be greater than or equal to the flow rate of the water guide chamber 410, the communication notch 211 needs to be accurately designed and calculated. This requires consideration of a plurality of factors, such as a speed, a flow rate, a pressure of the water flow, and a thickness and adsorption performance of the resin layer. Through accurate calculation and design, it may be ensured that a size and a shape of the communication notch 211 may satisfy requirements of the water guide chamber 410, thereby achieving optimal water flow effect. The flow rate of the communication notch 211 is greater than or equal to the flow rate of the water guide chamber 410, allowing the communication notch 211 to satisfy water flow requirements of the water guide chamber 410. If the flow rate of the communication notch 211 is too small, water may accumulate in the water guide chamber 410, thereby affecting filtering effect. By ensuring that the flow rate of the communication notch 211 is greater than or equal to the flow rate of the water guide chamber 410, accumulation phenomenon may be avoided and filtering efficiency may be improved. Meanwhile, since the flow rate of the communication notch 211 is optimized, the water flow may be output from the resin tank more evenly and stably. The filtering effect may be improved, and quality and yield of soft water may be ensured. Besides, since the water flow is better controlled, energy consumption may also be reduced, and overall performance of the resin tank assembly 10 may be improved.

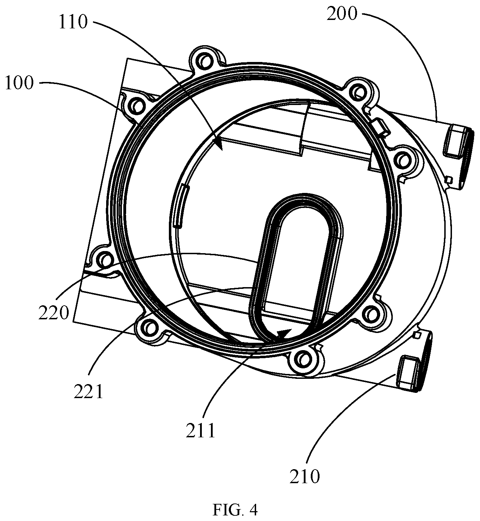

Referring to FIG. 4, in some embodiments, the water guide chamber 410 extends from the tank opening 120 in a circumferential direction facing the tank body 100, and an outer wall of the adapter seat 220 extends from a side of the water path component 200 toward a direction of the tank body 100, and encloses to form a water guide slot 223. It may be understood that the water guide chamber 410 is configured to communicate the central tube 300 protruding from the tank opening 120 and the soft water channel 210 provided inside the water path component 200, where a central axis of the water guide chamber 410 and a central axis of the soft water channel 210 may be provided at an angle to each other, and in this way, the central axis of the water guide chamber 410 and the central axis of the soft water channel 210 may be provided based on specific requirements, such as being perpendicular to each other, forming an acute angle or an obtuse angle. The outer wall of the adapter seat 220 protrudes from a side of the water path component 200 facing the tank body 100 to form the water guide slot 223, and an end face of the guide water slot 223 facing the resin tank is the open port 221. The adapter member 400 is provided to cover the open port 221 to form the water guide chamber 410 between the adapter seat 220 and the adapter member 400. Therefore, a mounting procedure is simplified and mounting efficiency is improved. Meanwhile, a design of the water guide chamber 410 may reduce restriction of a docking structure on the water flow, ensure that the water flows smoothly through the soft water channel 210 entering the water path component 200, and improve a soft water output rate.

Referring to FIG. 4, in some embodiments, an end of the adapter seat 220 facing a circumferential direction is provided to partially intersect with the soft water channel 210, a side of the soft water channel 210 corresponding to the adapter seat 220 is provided with a communication notch 211, and the communication notch 211 is configured to communicate the soft water channel 210 and the water guide chamber 410. It may be understood that by providing the communication notch, a flow rate at a communication port between the soft water channel 210 and the adapter seat 220 may be increased, and the water flow may be prevented from accumulating in the water guide chamber 410, and the soft water output efficiency can be improved.

In an embodiment, a flow cross-sectional area of the water guide chamber 410 is greater than or equal to a flow cross-sectional area of the central tube 300. It may be understood that the flow cross-sectional area of the water guide chamber 410 is greater than or equal to the flow cross-sectional area of the central tube 300, which may ensure that the water flow will not have problems of flow restriction or excessive resistance when passing through the water guide chamber 410. A water output efficiency of soft water may be effectively guaranteed. In addition, the resistance of the water flow may be reduced, the energy consumption may be reduced, and the overall performance of the resin tank assembly 10 may be improved. By optimizing designs of the water guide chamber 410 and the central tube 300, the water flow can be better controlled, so that the water flows through the resin layer more evenly and stably, thereby obtaining a better filtering effect.

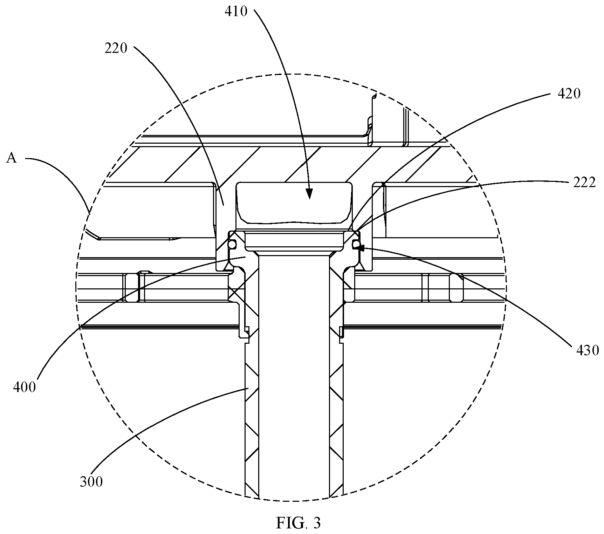

Referring to FIG. 3, in some embodiments, an inner wall of the open port 221 is provided with an annular abut step 222, a side of an outer peripheral edge of the adapter member 400 facing the adapter seat 220 extends to form an abut flange 420, and the abutting step abuts against the abut flange 420. It may be understood that the inner wall of the open port 221 is provided with the annular abut step 222 to match with the abut flange 420 extending from the outer peripheral edge of the adapter member 400 facing the side of the adapter seat 220. A tight connection between the adapter member 400 and the adapter seat 220 may be ensured, and the water is prevented from leaking from the connection, thereby improving the filtering effect and safety of use. A design of the annular abut step 222 may increase a contact area between the adapter member 400 and the inner wall of the open port 221, and improve stability of the connection. Meanwhile, abutment of the abut flange 420 and the abut step may form a sealed water guide chamber 410, which ensures that the water may flow smoothly through the resin layer. In addition, since the connection between the adapter member 400 and the open port 221 is achieved by the abutment of the abut step and the abut flange 420, no additional fix or fasten measures are required, which further improves alignment precision of the adapter member 400 and the adapter seat 220, and facilitates alignment mounting.

Referring to FIG. 3, in some embodiments, an outer peripheral wall of the adapter member 400 is provided with a seal slot 430, the resin tank assembly 10 further includes a seal member, the seal member is sleeved inside the seal slot 430, and the seal member abuts between a slot wall of the seal slot 430 and the inner wall of the open port 221. It may be understood that the outer peripheral wall of the adapter member 400 is provided with the seal slot 430. The seal slot 430 is configured to accommodate the seal member to provide a sealed connection between the adapter member 400 and the open port 221. A design of the seal slot 430 may ensure that the seal member may be firmly limited in the seal slot 430. The seal member abuts between the slot wall of the seal slot 430 and the inner wall of the open port 221. It may ensure that the seal member forms an effective seal layer between the adapter member 400 and the open port 221 to prevent water or other liquids from leaking. Sealing performance between the adapter member 400 and the adapter seat 220 is improved.

Referring to FIG. 1, in some embodiments, the adapter member 400 is integrally formed with the central tube 300. It may be understood that by integrally forming the central tube 300 and the adapter member 400, a docking structure between the central tube 300 and the adapter member 400 may be reduced, impact of the docking structure on a flow rate may be decreased, potential leakage points or looseness may be also reduced and overall sealing performance may be improved. Meanwhile, the integrally formed design may also simplify a production procedure and reduce production costs. By forming the adapter member 400 and the central tube 300 in one time, processing and assembly steps may be reduced, and production efficiency may be improved.

Referring to FIG. 1, in some embodiments, a side of the water path component 200 facing the tank body 100 extends to form a cover body portion 230, the cover body portion 230 covers an end of the tank body 100 provided with the tank opening 120, and the adapter seat 220 is provided in an inner cavity of the cover body portion 230. It may be understood that by combining the cover body portion 230, the adapter seat 220 and the tank body 100, a mounting procedure may be simplified and stability of an overall structure may be improved. Meanwhile, the cover body portion 230 may effectively protect the tank opening 120 and prevent external impurities or contaminants from entering an interior of the resin tank assembly 10, thereby maintaining internal cleanliness and filtering effect. By providing the adapter seat 220 in an inner cavity of the cover body portion 230, the mounting procedure is simplified and the stability of the overall structure is improved. The adapter seat 220 is connected to the tank body 100 through the cover body portion 230 to form a complete water guide path, and the water may flow out of the resin tank or flow into the resin tank more smoothly.

The present application further provides a water softening device, and the water softening device includes the above-mentioned resin tank assembly 10. A specific structure of the resin tank assembly 10 refers to the above-mentioned embodiments. Since this water softening device adopts all the solutions of all the above-mentioned embodiments, it has at least all the beneficial effects brought by the solutions of the above-mentioned embodiments, which will not be repeated here.

The present application further provides a resin tank assembly and a water softening device.

In the embodiment of the present application, as shown in FIG. 1 to FIG. 3, the resin tank assembly 10 includes a tank body 100, a water path component 200, a central tube 300 and an adapter member 400. The tank body 100 is provided with an accommodation cavity 110 and a tank opening 120 communicating with the accommodation cavity 110; the water path component 200 is mounted at an end of the tank body 100 close to the tank opening 120, the water path component 200 is provided with a soft water channel 210, a side of the water path component 200 facing the tank opening 120 is provided with an adapter seat 220 communicating with soft water channel 210, and the adapter seat 220 is provided to be an open port 221; the central tube 300 is provided inside the accommodation cavity 110, and a first end of the central tube 300 penetrates through the tank opening 120; and the adapter member 400 is connected to the first end of the central tube 300 and is provided to cover the open port 221 of the adapter seat 220 to form a water guide chamber 410, and the water guide chamber 410 communicates the central tube 300 and the soft water channel 210.

The tank body 100 is provided generally in a shape of a hollow cylinder, and an accommodation cavity 110 is formed inside the tank body 100, where the accommodation cavity 110 is a main part of the tank body 100 and is used to store resin. Based on application requirements, the accommodation cavity 110 may be designed to have different shapes and sizes to adapt to different resin volumes and performance requirements, which are not specifically limited here.

An end surface of an end of the tank body 100 is provided with a tank opening 120, and the tank opening 120 is configured to allow and control fluid to flow into and out of the accommodation cavity 110. A size and a shape of the tank opening 120 may be adjusted based on actual needs to optimize flow performance of resin.

The water path component 200 is mounted at an end of the tank body 100 close to the tank opening 120, and is provided with a soft water channel 210. The soft water channel 210 may guide a direction of water flow to guide soft water softened by the resin out of the tank body 100 for user use. A dock position between the water path component 200 and the tank opening 120 is provided with an adapter seat 220, and an end of the adapter seat 220 facing the tank opening 120 is designed to be an open port 221, to dock with the central tube 300.

The central tube 300 is located inside the accommodation cavity 110, and a first end of the central tube 300 penetrates through the tank opening 120. A second end of the central tube 300 protrudes into a bottom of the accommodation cavity 110 of the tank body 100, and the central tube 300 is mainly used as a channel for soft water flow guide in the tank body 100.

The adapter member 400 is connected to the first end of the central tube 300 and is provided to cover at the open port 221 of the adapter seat 220 to form a water guide chamber 410. The water guide chamber 410 connects the central tube 300 and the soft water channel 210 to ensure smooth flow of the water. A connection between the water path component 200 and the central tube 300 is simplified, which makes alignment more convenient and improves mounting efficiency. In addition, resistance of water flow may also be reduced, and filtering efficiency is improved.

In the present application, the adapter seat 220 at the water path component 200 is provided to be the open port 221, the central tube 300 is connected to the adapter seat 220 through the adapter member 400, and the adapter member 400 may be pre-mounted with an end of the central tube 300 before docking. When the central tube 300 is connected to the water path component 200, since the adapter seat 220 docks with the adapter member 400 through the open port 221, alignment between the adapter seat 221 and the adapter member 400 is facilitated, the connection between the water path component 200 and the central tube 300 is simplified, and mounting efficiency is improved.

Referring to FIG. 4, in some embodiments, the water guide chamber 410 extends from the tank opening 120 in a circumferential direction facing the tank body 100, and an outer wall of the adapter seat 220 extends from a side of the water path component 200 toward a direction of the tank body 100, and encloses to form a water guide slot 223. It may be understood that the water guide chamber 410 is configured to communicate the central tube 300 protruding from the tank opening 120 and the soft water channel 210 provided inside the water path component 200, where a central axis of the water guide chamber 410 and a central axis of the soft water channel 210 may be provided at an angle to each other, and in this way, the central axis of the water guide chamber 410 and the central axis of the soft water channel 210 may be provided based on specific requirements, such as being perpendicular to each other, forming an acute angle or an obtuse angle. The outer wall of the adapter seat 220 protrudes from a side of the water path component 200 facing the tank body 100 to form the water guide slot 223, and an end face of the guide water slot 223 facing the resin tank is the open port 221. The adapter member 400 is provided to cover the open port 221 to form the water guide chamber 410 between the adapter seat 220 and the adapter member 400. Therefore, a mounting procedure is simplified and mounting efficiency is improved. Meanwhile, a design of the water guide chamber 410 may reduce restriction of a docking structure on the water flow, ensure that the water flows smoothly through the soft water channel 210 entering the water path component 200, and improve a soft water output rate.

Referring to FIG. 4, in some embodiments, an end of the adapter seat 220 facing a circumferential direction is provided to partially intersect with the soft water channel 210, a side of the soft water channel 210 corresponding to the adapter seat 220 is provided with a communication notch 211, and the communication notch 211 is configured to communicate the soft water channel 210 and the water guide chamber 410. It may be understood that by providing the communication notch, a flow rate at a communication port between the soft water channel 210 and the adapter seat 220 may be increased, the water flow may be prevented from accumulating in the water guide chamber 410, and the soft water output efficiency can be improved.

Further, a flow rate of the communication notch 211 is greater than or equal to a flow rate of the water guide chamber 410. In this embodiment, since the water guide chamber 410 is a main water flow channel of the soft water in the resin tank assembly 10, the flow rate of the communication notch 211 is provided to be greater than or equal to the flow rate of the water guide chamber 410. A soft water chamber communicates the soft water channel 210 and the central tube 300, and is responsible for guiding water to flow into the resin layer or guiding water to flow out of the resin layer. If the flow rate of the communication notch 211 is less than the flow rate of the water guide chamber 410, the water will not flow smoothly, and even accumulation will occur. This will not only affect softening effect, but may also cause an impact force of the water flow on the resin layer to be insufficient, affecting adsorption effect of the resin layer. In order to make the flow rate of the communication notch 211 be greater than or equal to the flow rate of the water guide chamber 410, the communication notch 211 needs to be accurately designed and calculated. This requires consideration of a plurality of factors, such as a speed, a flow rate, a pressure of the water flow, and a thickness and adsorption performance of the resin layer. Through accurate calculation and design, it may be ensured that a size and a shape of the communication notch 211 may satisfy requirements of the water guide chamber 410, thereby achieving optimal water flow effect. The flow rate of the communication notch 211 is greater than or equal to the flow rate of the water guide chamber 410, allowing the communication notch 211 to satisfy water flow requirements of the water guide chamber 410. If the flow rate of the communication notch 211 is too small, water may be accumulated in the water guide chamber 410, thereby affecting filtering effect. By ensuring that the flow rate of the communication notch 211 is greater than or equal to the flow rate of the water guide chamber 410, accumulation phenomenon may be avoided and filtering efficiency may be improved. Meanwhile, since the flow rate of the communication notch 211 is optimized, the water flow may be output from the resin tank more evenly and stably. The filtering effect may be improved and quality and yield of soft water may be ensured. Besides, since the water flow is better controlled, energy consumption may also be reduced, and overall performance of the resin tank assembly 10 may be improved.

Referring to FIG. 3, in some embodiments, an inner wall of the open port 221 is provided with an annular abut step 222, a side of an outer peripheral edge of the adapter member 400 facing the adapter seat 220 extends to form an abut flange 420, and the abutting step abuts against the abut flange 420. It may be understood that the inner wall of the open port 221 is provided with the annular abut step 222 to match with the abut flange 420 extending from the outer peripheral edge of the adapter member 400 facing the side of the adapter seat 220. A tight connection between the adapter member 400 and the adapter seat 220 may be ensured, and the water is prevented from leaking from the connection, thereby improving the filtering effect and safety of use. A design of the annular abut step 222 may increase a contact area between the adapter member 400 and the inner wall of the open port 221, and improve stability of the connection. Meanwhile, abutment of the abut flange 420 and the abut step may form a sealed water guide chamber 410, which ensures that the water may flow smoothly through the resin layer. In addition, since the connection between the adapter member 400 and the open port 221 is achieved by the abutment of the abut step and the abut flange 420, no additional fix or fasten measures are required, which further improves alignment accuracy of the adapter member 400 and the adapter seat 220, and facilitating alignment mounting.

Referring to FIG. 3, in some embodiments, an outer peripheral wall of the adapter member 400 is provided with a seal slot 430, the resin tank assembly 10 further includes a seal member, the seal member is sleeved inside the seal slot 430, and the seal member abuts between a slot wall of the seal slot 430 and the inner wall of the open port 221. It may be understood that the outer peripheral wall of the adapter member 400 is provided at the seal slot 430. The seal slot 430 is configured to accommodate the seal member to provide a sealed connection between the adapter member 400 and the open port 221. A design of the seal slot 430 may ensure that the seal member may be firmly limited in the seal slot 430. The seal member abuts between the slot wall of the seal slot 430 and the inner wall of the open port 221. It may ensure that the seal member forms an effective seal layer between the adapter member 400 and the open port 221 to prevent water or other liquids from leaking. Sealing performance between the adapter member 400 and the adapter seat 220 is improved.

In an embodiment, a flow cross-sectional area of the water guide chamber 410 is greater than or equal to a flow cross-sectional area of the central tube 300. It may be understood that the flow cross-sectional area of the water guide chamber 410 is greater than or equal to the flow cross-sectional area of the central tube 300, which may ensure that the water flow will not have problems of flow restriction or excessive resistance when passing through the water guide chamber 410. A water output efficiency of soft water may be effectively guaranteed. In addition, the resistance of the water flow may be reduced, the energy consumption may be reduced, and the overall performance of the resin tank assembly 10 may be improved. By optimizing designs of the water guide chamber 410 and the central tube 300, the water flow may be better controlled, and the water flows through the resin layer more evenly and stably, thereby obtaining a better filtering effect.

Referring to FIG. 1, in some embodiments, the adapter member 400 is integrally formed with the central tube 300. It may be understood that by integrally forming the central tube 300 and the adapter member 400, a docking structure between the central tube 300 and the adapter member 400 may be reduced, impact of the docking structure on a flow rate may be decreased, potential leakage points or looseness may be also reduced and overall sealing performance may be improved. Meanwhile, the integrally formed design may also simplify a production procedure and reduce production costs. By forming the adapter member 400 and the central tube 300 in one time, processing and assembly steps may be reduced, and production efficiency may be improved.

Referring to FIG. 1, in some embodiments, a side of the water path component 200 facing the tank body 100 extends to form a cover body portion 230, the cover body portion 230 covers an end of the tank body 100 provided with the tank opening 120, and the adapter seat 220 is provided inside an inner cavity of the cover body portion 230. It may be understood that by combining the cover body portion 230, the adapter seat 220 and the tank body 100, a mounting procedure may be simplified and stability of an overall structure may be improved. Meanwhile, the cover body portion 230 may effectively protect the tank opening 120 and prevent external impurities or contaminants from entering an interior of the resin tank assembly 10, thereby maintaining internal cleanliness and filtering effect. By providing the adapter seat 220 in an inner cavity of the cover body portion 230, the mounting procedure is simplified and the stability of the overall structure is improved. The adapter seat 220 is connected to the tank body 100 through the cover body portion 230 to form a complete water guide path, and the water may flow out of the resin tank or flow into the resin tank more smoothly.

The present application further provides a water softening device, and the water softening device includes the above-mentioned resin tank assembly 10. A specific structure of the resin tank assembly 10 refers to the above-mentioned embodiments. Since this water softening device adopts all the solutions of all the above-mentioned embodiments, it has at least all the beneficial effects brought by the solutions of the above-mentioned embodiments, which will not be repeated here.

It should be noted that, the above embodiments are only used to illustrate the present application, but not to limit the present application. Although the present application is provided with been described in detail with reference to the embodiments, those skilled in the art should understand that various combinations, modifications, or equivalent replacements of the solutions of the present application do not depart from the scope of the solutions of the present application, and should be all covered by the scope of the claims of the present application.

## Claims

1. A resin tank assembly, comprising:
a tank body provided with an accommodation cavity and a tank opening communicating with the accommodation cavity;
a water path plate mounted at an end of the tank body close to the tank opening, and provided with a soft water channel and an adapter seat communicating with the soft water channel;
a central tube provided inside the accommodation cavity, wherein a first end of the central tube penetrates through the tank opening; and
an adapter member connected between the first end of the central tube and the adapter seat, wherein the adapter member and the adapter seat enclose to form a water guide chamber communicating the soft water channel and the central tube.

2. The resin tank assembly of claim 1, wherein a flow rate of the water guide chamber is greater than or equal to a flow rate of the central tube.

3. The resin tank assembly of claim 1 or 2, wherein the adapter seat extends from an axis of the tank body in a circumferential direction, the adapter seat encloses to form the water guide chamber, a side of the adapter seat facing the accommodation cavity is provided with a communication port, and the adapter member is blocked at the communication port.

4. The resin tank assembly of claim 3, wherein an end of the adapter seat facing a circumferential direction is provided to partially intersect with the soft water channel, a side of the soft water channel corresponding to the adapter seat is provided with a communication notch, and the communication notch is configured to communicate the soft water channel and the water guide chamber.

5. The resin tank assembly of claim 4, wherein a flow area of the communication notch is greater than or equal to a flow area of the water guide chamber.

6. The resin tank assembly of any one of claims 3 to 5, wherein an inner wall of the communication port is provided with an annular abut step, a side of an outer peripheral edge of the adapter member facing the adapter seat extends to form an abut flange, and the abut step abuts against the abut flange.

7. The resin tank assembly of any one of claims 3 to 6, wherein an outer peripheral wall of the adapter member is provided with a seal slot, the resin tank assembly further comprises a seal member, the seal member is sleeved inside the seal slot, and the seal member abuts between a slot wall of the seal slot and an inner wall of the communication port.

8. The resin tank assembly of any one of claims 1 to 7, wherein the adapter member is integrally formed with the central tube.

9. The resin tank assembly of any one of claims 1 to 8, wherein a side of the water path plate facing the tank body extends to form a cover body portion, the cover body portion covers an end of the tank body provided with the tank opening, and the adapter seat is provided inside an inner cavity of the cover body portion.

10. A water softening device, comprising a water softening valve and the resin tank assembly of any one of claims 1 to 9.

11. A resin tank assembly, comprising:
a tank body provided with an accommodation cavity and a tank opening communicating with the accommodation cavity;
a water path component mounted at an end of the tank body close to the tank opening, and provided with a soft water channel, wherein a side of the water path component facing the tank opening is provided with an adapter seat communicating with the soft water channel, and the adapter seat is provided to be an open port;
a central tube provided inside the accommodation cavity, wherein a first end of the central tube penetrates through the tank opening; and
an adapter member connected to the first end of the central tube and provided to cover the open port of the adapter seat to form a water guide chamber, wherein the water guide chamber communicates the central tube and the soft water channel.

12. The resin tank assembly of claim 11, wherein the water guide chamber extends from the tank opening in a circumferential direction facing the tank body, and an outer wall of the adapter seat extends from a side of the water path component toward a direction of the tank body, and encloses to form a water guide slot.

13. The resin tank assembly of claim 12, wherein an end of the adapter seat facing a circumferential direction is provided to partially intersect with the soft water channel, a side of the soft water channel corresponding to the adapter seat is provided with a communication notch, and the communication notch is configured to communicate the soft water channel and the water guide chamber.

14. The resin tank assembly of claim 13, wherein a flow rate of the communication notch is greater than or equal to a flow rate of the water guide chamber.

15. The resin tank assembly of any one of claims 12 to 14, wherein an inner wall of the open port is provided with an annular abut step, a side of an outer peripheral edge of the adapter member facing the adapter seat extends to form an abut flange, and the abut step abuts against the abut flange.

16. The resin tank assembly of any one of claims 12 to 15, wherein an outer peripheral wall of the adapter member is provided with a seal slot, the resin tank assembly further comprises a seal member, the seal member is sleeved inside the seal slot, and the seal member abuts between a slot wall of the seal slot and an inner wall of the open port.

17. The resin tank assembly of any one of claims 11 to 16, wherein a flow cross-sectional area of the water guide chamber is greater than or equal to a flow cross-sectional area of the central tube.

18. The resin tank assembly of any one of claims 11 to 17, wherein the adapter member is integrally formed with the central tube.

19. The resin tank assembly of any one of claims 11 to 18, wherein a side of the water path component facing the tank body extends to form a cover body portion, the cover body portion covers an end of the tank body provided with the tank opening, and the adapter seat is provided inside an inner cavity of the cover body portion.

20. A water softening device, comprising a water softening valve and the resin tank assembly of any one of claims 11 to 19.
